Europäisches Patentamt

European Patent Office

Office européen des brevets

(11) Veröffentlichungsnummer: **0 158 626**
**A2**

(12) # EUROPÄISCHE PATENTANMELDUNG

(21) Anmeldenummer: 85890070.7

(22) Anmeldetag: 21.03.85

(51) Int. Cl.⁴: **C 22 B 7/00**
**H 01 M 6/52**

(30) Priorität: 10.04.84 AT 1201/84

(43) Veröffentlichungstag der Anmeldung:
16.10.85 Patentblatt 85/42

(84) Benannte Vertragsstaaten:
DE FR GB IT SE

(71) Anmelder: VOEST-ALPINE Aktiengesellschaft
Muldenstrasse 5
A-4020 Linz(AT)

(72) Erfinder: Demmel, Hans, Dipl.-Ing. Dr.
Tauberweg 9
A-4020 Linz(AT)

(72) Erfinder: Raptis, Sotirios, Dipl.-Ing. Dr.
Helmholtzstrasse 9/I
A-4020 Linz(AT)

(72) Erfinder: Binder, Otto
Paschingerstrasse 42
A-4060 Leonding(AT)

(74) Vertreter: Wolfram, Gustav, Dipl.-Ing.
Schwindgasse 7 P.O. Box 205
A-1041 Wien(AT)

(54) Verfahren zur Rückgewinnung von Metallen aus gebrauchten galvanischen Elementen.

(57) Um bei einem solchen Verfahren durch Öffnen der Zellenmäntel, insbesondere von Knopfzellen, Auslaugen der geöffneten Elemente mit einem sauren Medium, Fällen von gelösten metallischen Bestandteilen und aufarbeiten der angefallenen Niederschläge zu den reinen Metallen, die einzelnen Metalle nahezu quantitativ und in möglichst reinem Zustand rückzugewinnen, wird die bei der Auslaugung der geöffneten galvanischen Elemente, insbesondere Knopfzellen gewonnene saure Laugungsflüssigkeit mit $H_2S$ und/oder wasserlöslichen Sulfiden zur Ausfällung von praktisch unlöslichen Sulfiden gelöster Metalle behandelt und sodann der Überstand abgetrennt und durch Zusatz von Hydroxiden und oder Carbonaten - vorzugsweise bis zu einem pH-Wert von 9 - alkalisiert, wodurch die schwer löslichen Hydroxide und oder Carbonate gelöster Metalle gewonnen und die Sulfidfällungen vervollständigt werden.

Croydon Printing Company Ltd.

## Verfahren zur Rückgewinnung von Metallen aus gebrauchten galvanischen Elementen

Die Erfindung betrifft ein Verfahren zur Rückgewinnung von Metallen aus gebrauchten galvanischen Elementen, insbesondere Knopfzellen, durch Öffnen der Zellenmäntel, Auslaugen der geöffneten Elemente mit einem sauren Medium, Fällen von gelösten metallischen Bestandteilen und Aufarbeiten der angefallenen Niederschläge zu den reinen Metallen.
Ein Verfahren dieser Art ist aus der AT-B - 373 731 bekannt. Bei diesem bekannten Verfahren erfolgt der Aufschluß der gebrauchten Zellen entweder durch Erhitzen oder durch mechanische Zerkleinerung bei sehr tiefen Temperaturen. Nicht in allen Knopfzellen wird beim Erhitzen auf 500 bis 600°C ein genügend hoher Druck aufgebaut, um diese zu sprengen; beispielsweise bleiben korrodierte Batterien und ein großer Anteil von Silberbatterien bei dieser Behandlung ungeöffnet.

Die mechanische Zerkleinerung bei ca. -150°C kann nur mit Mühlen durchgeführt werden, und die wertvollen Stoffe liegen dabei in nicht gut zur technischen Aufbereitung geeigneter Form vor. Diese Aufschlußart ist wegen der einzuhaltenden Tiefsttemperaturen auch äußerst energieaufwendig und darüber hinaus weisen die hauptsächlich aus Cr-Ni-Stahl (18/8) bestehenden Zellenmäntel selbst bei diesen Temperaturen keine befriedigende Sprödigkeit auf. Bei der anschließenden Säurebehandlung mit verdünnter Salpetersäure werden in entladenen Silberoxidzellen vorhandene Silberplättchen nur zu einem geringen Teil gelöst, so daß entweder erhebliche Silberverluste oder ein fast völliges Auflösen der Batteriegehäuse, verbunden mit hohem Säureverbrauch und großen Eisen-Schlammengen in Kauf genommen werden müßten.

Das gelöste Silber wird nach Abtrennung der ungelösten Bestandteile durch Chloridzusatz als AgCl gefällt und anschließend zu Silber reduziert und geschmolzen. Alle anderen Metalle, wie Cadmium, Aluminium, Eisen, Kobalt, Nickel, Chrom, Mangan, Zink, Blei und gegebenenfalls Quecksilber bleiben in Lösung, aus welch letzterer durch Zusatz von $CaCO_3$ und/oder $CaO$ bis zu einem pH-Wert von etwa 5 Eisen, Chrom, Aluminium und Mangan - sofern vorhanden - als Hydroxidschlämme ausgefällt werden. In diesen oberflächenreichen Schlämmen befinden sich auch mitgerissene Metalle, wie Blei, Cadmium und Zink, welche bei diesem pH-Wert selbst keine unlöslichen Carbonate oder Hydroxide bilden. Insbesondere die Anwesenheit von Cadmium in den Schlämmen verhindert aber aus Gründen des Umweltschutzes deren Lagerung in Deponien.

Die verbleibende Lösung enthält neben dem restlichen Cadmium, Nickel, Kupfer, Mangan und Zink noch Quecksilber. Die elektrolytische Abscheidung dieser Metalle ist in diesem Fall sehr erschwert, da die üblicherweise verwendeten Kohleelektroden, an denen sich das Hg abscheiden und von denen es abtropfen soll, durch Cd und gegebenenfalls in der Lösung zusätzlich enthaltenes Kupfer infolge Bildung fester Amalgane unwirksam werden.

Die Erfindung bezweckt die Vermeidung der geschilderten Schwierigkeiten und Unzulänglichkeiten und stellt sich die Aufgabe, ein betriebssicheres Verfahren zur Aufarbeitung der in immer größerer Zahl anfallenden, gebrauchten galvanischen Elemente verschiedenster Sorten zu schaffen, wobei praktisch alle Bestandteile einer Wiederverwertung zugeführt, die Metalle aus dem Inneren der Zellen voneinander getrennt und möglichst quantitativ und rein rückgewonnen werden können.

Diese Aufgabe wird bei einem Verfahren der eingangs definierten Art erfindungsgemäß dadurch gelöst, daß die bei der Auslaugung der geöffneten galvanischen Elemente, insbesondere Knopfzellen, gewonnene saure Laugungsflüssigkeit mit $H_2S$ und/oder wasserlöslichen Sulfiden zur Ausfällung von praktisch unlöslichen Sulfiden gelöster Metalle behandelt und sodann der Überstand abgetrennt und durch Zusatz von Hydroxiden und/oder Carbonaten - vorzugsweise bis zu einem pH-Wert von 9 - alkalisiert wird und so die schwer löslichen Hydroxide und/oder Carbonate gelöster Metalle gewonnen und die Sulfidfällungen vervollständigt werden.

Die Knopfzellen werden mechanisch geöffnet, beispielsweise durch Aufschneiden bzw. Trennschleifen der Zellmäntel.

Als besonders zweckmäßig hat sich erweisen, die Mäntel der Knopfzellen durch Ausübung mechanischen Druckes auf die zylindrischen Seitenwände der Zellennäpfe zu öffnen. - Dabei springen die mittels einer Dichtung gegen die Zellennäpfe elektrisch isolierten Zellendeckel ab und der Zelleninhalt liegt frei. Der Öffnungsvorgang ist kontinuierlich überwachbar, so daß keine ungeöffneten Batterien zur Auslaugung gelangen. Es ist bei dieser Öffnungstechnik lediglich notwendig, die Zellen vor dem Einführen zwischen die Preßbacken der Öffnungseinrichtung nach ihrem Durchmesser zu sortieren. Dies geschieht in einfachster Weise durch Sieben.

Die Hauptmenge des in den Zellen enthaltenen elementaren Quecksilbers wird nach dem Öffnen sehr leicht aufgrund der hohen Dichte des Hg mittels eines feinmaschigen Rüttelsiebes oder durch Zentrifugieren von den restlichen Bestandteilen abgetrennt und kann destillativ gereinigt werden.

Vorzugsweise wird die saure Laugungsflüssigkeit, aus der die Sulfide ausgefällt werden, durch Vereinigung der bei einer mehrstufig zuerst mit Wasser, dann mit verdünnter Salzsäure und sodann mit verdünnter Salpetersäure durchgeführten Laugung resultierenden Laugungsflüssigkeiten gebildet.

Da der Batterieinhalt nicht wie nach dem thermischen Öffnen verkrustet vorliegt, wird zunächst ein- oder mehrmals nur mit Wasser gelaugt, wobei die Hauptmenge der Inhaltsstoffe zwar ungelöst bleibt, diese Stoffe jedoch durch intensives Rühren gründlich gewaschen und von löslichen Elektrolyt- bzw. Metallsalzen befreit werden. Vorhandene feinteilige Substanzen, wie Zinkoxid und organische Bestandteile aus den Elektrolytpasten werden bei dieser Behandlung in Suspension gebracht und mit der wässerigen Phase abgezogen. Der auf diese Weise ohne Einsatz teurer Chemikalien vorbereitete Rückstand wird mit etwa 15 bis 20 %iger Salzsäure weiter gelaugt, wobei selektiv Reste von Zink, Zinkoxid, Blei und Bleioxid sowie Cadmium und Cadmiumoxid gelöst werden.

Die wässerigen Suspensionen und die salzsaure Laugungsflüssigkeit werden in einem Rührkessel vereinigt, wodurch insbesondere suspendiertes Zinkoxid in Lösung geht und gleichzeitig Silber als AgCl ausgefällt wird.

In einer weiteren Stufe wird der verbliebene Rückstand mit etwa 10 bis 15 %iger Salpetersäure gelaugt, um insbesondere an den Zellenmänteln haftende Amalgame abzulösen. Auch diese Laugungsflüssigkeit wird dem Rührkessel mit der salzsauren Suspension zugeführt. Das Rühren wird in allen Stufen am effektivsten durch Einsatz eines Flügelrührers bewerkstelligt.

Da die Laugung zweckmäßig bei Temperaturen von etwa 80 bis 90°C durchgeführt wird, müssen für diese Operation dicht verschließbare Rührkessel verwendet werden. Die entstehenden, quecksilberhaltigen Dämpfe werden über eine Filteranlage oder eine Kühlfalle geführt.

Aus den vereinigten Laugungsflüssigkeiten werden die ungelösten, hauptsächlich Bestandteile der Zellenmäntel und verunreinigtes elementares Silber umfassenden Rückstände abgetrennt.

Die aus niedrig- oder hochlegiertem Stahl bestehenden Zellenmäntel bzw. Batteriegehäuse liegen in blankgebeiztem Zustand vor. In den Rückständen befinden sich auch die Kunststoffdichtungen der Gehäuse sowie Membranen bzw. Diaphragmen.

Bei der Sulfidbehandlung der sauren Laugungsflüssigkeit wird unter Rühren entweder $H_2S$ eingeleitet oder ein wasserlösliches Sulfid, wie Alkalimetall- und Ammoniumsulfide, zugesetzt.

Zweckmäßig wird zur Ausfällung der praktisch unlöslichen Sulfide eine wässerige Lösung von Natriumsulfid zugeführt. Dabei wird das durch die Laugung mit Salpetersäure gelöste Silber, welches nicht bereits als AgCl suspendiert vorliegt, sowie das Quecksilber quantitativ erfaßt, da die Sulfide dieser Schwermetalle ein extrem niedriges Löslichkeitsprodukt aufweisen. In den Sulfidniederschlag werden gegebenenfalls Spuren von Cadmium, Zink, Eisen, Nickel und Blei mitgerissen.

Nach einer vorteilhaften Ausführungsform der Erfindung werden die nach der Sulfidfällung im sauren Medium abgetrennten Niederschläge, die im wesentlichen aus Silberchlorid, Silbersulfid und Quecksilbersulfid bestehen, getrocknet, geröstet und zu den Metallen reduziert.

Die Abtrennung der kombinierten Chlorid-Sulfidniederschläge erfolgt durch Filtration oder Zentrifugation. Die Konzentration der abgetrennten Lösung an Quecksilber beträgt noch ca. 0,8 mg/l, jene des Silbers nur mehr weniger als 0,01 mg/l. Die Niederschläge werden zunächst in einem Ofen bei ca. 200°C getrocknet, sodann unter Zutritt von Sauerstoff (Luft) bei etwa 600°C geröstet, wobei die Sulfide größtenteils in Oxide übergeführt werden, und schließlich unter reduzierenden Bedingungen - beispielsweise in einem Kohle- oder Graphittiegel - eingeschmolzen. Die Abgase der Röst- und Reduktionsbehandlung enthalten $SO_2$, Cadmium-, Zink-, Blei- und Quecksilberdämpfe. Die Metalle werden fraktioniert kondensiert und das Restgas wird zur Entfernung letzter Spuren von Hg über eine Filteranlage, beispielsweise Jod-Aktivkohlefilter, geleitet. Das Schwefeldioxid kann mittels einer Gaswaschanlage aus dem Abgas gewonnen werden. Alternativ kann das Restgas durch einen auf niedriger Temperatur gehaltenen Kondensator geführt werden, in welchem das noch mitgeführte Quecksilber zurückgehalten wird. In einer nachgeschalteten Tiefkühlfalle kann auch das Schwefeldioxid in flüssiger oder fester Form aufgefangen werden.

Das bei der Reduktion anfallende Rohsilber wird einer elektrolytischen Raffination unterworfen.

Nach einer weiteren bevorzugten Ausgestaltung des erfindungsgemäßen Verfahrens werden die in der sauren Laugungsflüssigkeit ungelöst verbliebenen Rückstände einer Trennoperation zur Gewinnung des elementaren Silbers unterworfen, worauf die Silberbestandteile mit den nach der Sulfidfällung im sauren Medium abgetrennten Niederschlägen vereinigt und aufgearbeitet werden, wie bereits beschrieben wurde.

Die Rückstände der sauren Laugung bestehen, wie auch bereits dargelegt wurde, aus den Bestandteilen der Zellenmäntel, organischen Materialien und (meist etwa 3 bis 4 % Quecksilber enthaltenden) Silberblättchen. Zur Ausführung der Trennoperation wird der Dichteunterschied zwischen Silber und den anderen Rückständen ausgenützt. Beispielsweise können die Rückstände mit Wasser über eine geneigte Ebene mit rauher bzw. unregelmäßiger Oberfläche gespült werden, wobei sich das schwerere Silber auf dieser Oberfläche ansammelt und die übrigen Bestandteile mitgeführt werden. Es ist auch möglich, das Gemisch mit Wasser in der Mitte einer sich drehenden Scheibe aufzugeben, wobei die leichteren Anteile schneller zum Rand der Scheibe transportiert werden. Die metallischen Gehäusebestandteile der Zellen stellen einen wertvollen, direkt wiederverwertbaren Edelschrott dar.

Die Alkalisierung des Überstandes - nämlich des sauren Filtrates oder Zentrifugates nach der Sulfidfällung, welches noch Cd, Zn, Ni, Co, Fe, Cr, Pb und üblicherweise etwa 0,8 mg Hg/l enthält - wird vorzugsweise durch Zusatz von Natriumhydroxid und/oder -carbonat vorgenommen. Dabei werden die erwähnten Metalle als Carbonate oder Hydroxide ausgefällt. Da die Lösung auch noch Sulfide bzw. Schwefelwasserstoff enthält, findet infolge der pH-Wert-Erhöhung zusätzlich eine Ausscheidung von unlöslichen Sulfiden noch in Lösung befindlicher Metallspuren statt, so daß sämtliche Metalle nunmehr praktisch quantitativ entfernt sind.

Vorzugsweise können auch die nach Alkalisieren der sauren Laugungsflüssigkeit gewonnenen Hydroxid-, Carbonat- und Sulfidausfällungen nach demselben Verfahren wie die sauer gefällte Sulfidfraktion, also durch Trocknen, Rösten und Reduzieren aufgearbeitet werden.

Besonders vorteilhaft wird die Aufarbeitung der Niederschläge bzw. Ausfällungen durch Reduktion unter Zusatz von Soda und/oder Borax bei Temperaturen von 950 bis 1100°C vorgenommen. Das in flüssiger Form gewonnene Rohsilber hat folgende durchschnittliche Zusammensetzung:

Hg: $< 0,001$ %

Pb: 0,044 %

Cd: 0,0016 %

Ni: 0,21 %

Zn: 0,23 %

Fe: 2,8 %

Rest: Ag

Zur Feinsilberherstellung wird Rohsilber in bekannter Weise als Anode geschaltet und elektrolytisch auf einer Feinsilberkathode abgeschieden. Im Anodenschlamm finden sich die Metalle Cd, Zn, Pb, Fe, Ni und Co, welche wieder den im Lauf des erfindungsgemäßen Verfahrens angefallenen Niederschlägen zugesetzt werden können, wobei Cd, Zn und Pb weiter abgetrieben werden und die Metalle Fe, Ni und Co weiter angereichert werden.

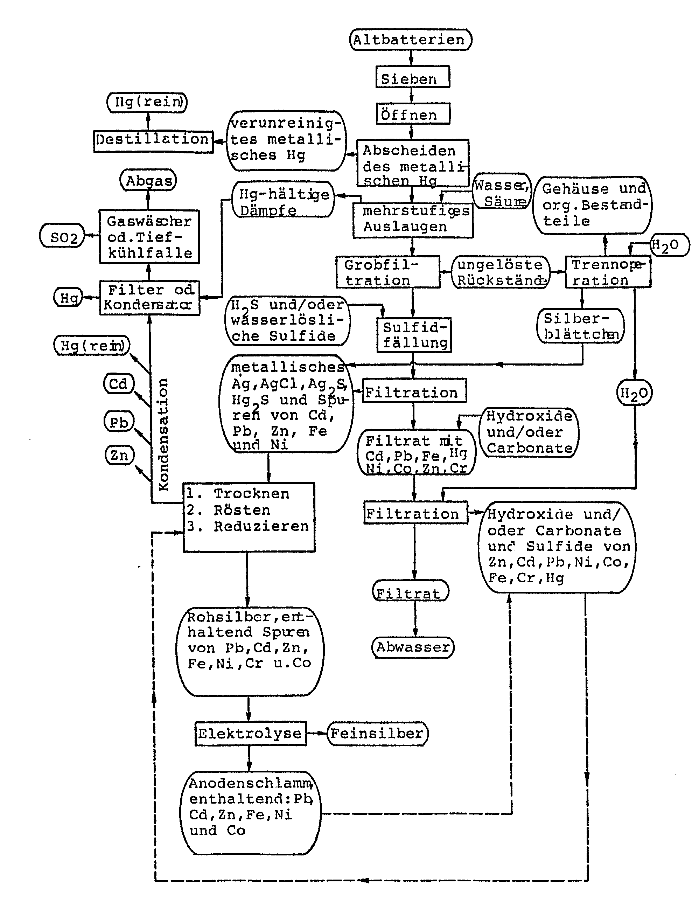

Die Erfindung wird anhand des in der Zeichnung dargestellten Verfahrensschemas näher erläutert.

Zunächst werden Fraktionen von Zellen gleichen Durchmessers durch Sieben bereitgestellt, wenn sie durch Druckausübung auf ihre Seitenwände geöffnet werden sollen. Nach dem Öffnen wird die Hauptmenge des verunreinigten metallischen Quecksilbers in der weiter oben beschriebenen Weise abgetrennt. Die restlichen Bestandteile werden mehrstufig ausgelaugt und die resultierende Mischung einer Grobfiltration unterworfen, wobei die ungelösten Rückstände, nämlich im wesentlichen die gereinigten Zellenmäntel, Silberblättchen und organischen Bestandteile der Zellen, wie Dichtungen und Diaphragmen bzw. Separatoren, abgetrennt werden. Diese Rückstände können

- 9 -

0158626

wieder einer Trennoperation in - meist Hg-hältige - Silberblättchen einerseits und Batteriegehäuse und organische Bestandteile andererseits unterzogen werden.

Dem Filtrat, welches AgCl suspendiert enthält, werden $H_2S$ und/oder wasserlösliche Sulfide zugesetzt, wodurch im wesentlichen eine Ausfällung von Quecksilber- und Silbersulfid bewirkt wird. Die Feststoffe werden abgetrennt und mit den unter Ausnützung des Dichteunterschiedes (durch Schweretrennung) erhaltenen Silberblättchen vereinigt. Diese Feststoffmischung wird getrocknet, geröstet und reduzierend eingeschmolzen. Aus den beim Trocknen, Rösten und Reduzieren anfallenden Abgasen werden die Metalle Zn, Cd, Pb und vor allem Hg durch Kondensation rein gewonnen.

Die noch im Abgas verbliebenen Hg-Dämpfe werden in einem Filter oder einem Kondensator aufgefangen. Durch diese Reinigungsvorrichtung werden auch die quecksilberhaltigen Dämpfe der Laugungsstufe geführt. Das von Metalldämpfen freie Abgas wird noch durch einen nachgeschalteten Gaswäscher oder eine Tiefkühlfalle geleitet, um auch das beim Röstvorgang entstehende $SO_2$ zu erfassen.

Das saure Filtrat bzw. der Überstand nach der Sulfidfällung wird mit Hydroxiden und/oder Carbonaten versetzt und alkalisiert. Der dabei resultierende Niederschlag aus schwerlöslichen Hydroxiden und/oder Carbonaten und Sulfiden wird mit dem im Verlauf der Trennoperation zur Gewinnung der Silberblättchen anfallenden, praktisch reinen Wasser gewaschen und weiter zu den reinen Metallen verarbeitet.

Bei der aus dem Schema ersichtlichen Verfahrensvariante wird dieser Niederschlag in gleicher Weise wie der nach der Sulfidfällung in saurem Medium abgetrennte Niederschlag behandelt und weiterverarbeitet.

Das Filtrat von der letzten Fällungsstufe wird laufend auf seinen Gehalt an Cadmium, Blei und Quecksilber überprüft und verläßt bei nachgewiesener Unbedenklichkeit als Abwasser den Prozeß.

Das nach der Reduktion abgezogene Rohsilber wird in einer Elektrolysestufe zu Feinsilber raffiniert und der dabei entstehende Anodenschlamm kann - wie in der Zeichnung durch den strichlierten Linienzug angedeutet ist - gemeinsam mit den bei der Alkalisierung der Laugungsflüssigkeit erhaltenen Niederschlägen weiterverarbeitet werden.

Nach dem erfindungsgemäßen Verfahren ist somit eine praktisch vollständige Aufarbeitung von entladenen galvanischen Elementen ohne Umweltbelastung möglich. Die wertvollen Metalle werden dabei voneinander getrennt und in reiner Form rückgewonnen. Es versteht sich, daß das Verfahren nicht nur für Knopfzellen anwendbar ist, sondern auch für andere Arten von Batterien, bzw. es kann die Verarbeitung verschiedener Batterienarten nach diesem Verfahren kombiniert durchgeführt werden.

Patentansprüche:

1. Verfahren zur Rückgewinnung von Metallen aus gebrauchten galvanischen Elementen, insbesondere Knopfzellen, durch Öffnen der Zellenmäntel, Auslaugen der geöffneten Elemente mit einem sauren Medium, Fällen von gelösten metallischen Bestandteilen und Aufarbeiten der angefallenen Niederschläge zu den reinen Metallen, dadurch gekennzeichnet, daß die bei der Auslaugung der geöffneten galvanischen Elemente, insbesondere Knopfzellen, gewonnene saure Laugungsflüssigkeit mit $H_2S$ und/oder wasserlöslichen Sulfiden zur Ausfällung von praktisch unlöslichen Sulfiden gelöster Metalle behandelt und sodann der Überstand abgetrennt und durch Zusatz von Hydroxiden und/oder Carbonaten- vorzugsweise bis zu einem pH-Wert von 9 - alkalisiert wird und so die schwer löslichen Hydroxide und/oder Carbonate gelöster Metalle gewonnen und die Sulfidfällungen vervollständigt werden.

2. Verfahren nach Anspruch 1, dadurch gekennzeichnet, daß die saure Laugungsflüssigkeit, aus der die Sulfide ausgefällt werden, durch Vereinigung der bei einer mehrstufig zuerst mit Wasser, dann mit verdünnter Salzsäure und sodann mit verdünnter Salpetersäure durchgeführten Laugung resultierenden Laugungsflüssigkeiten gebildet wird.

3. Verfahren nach einem der Ansprüche 1 oder 2, dadurch gekennzeichnet, daß aus den vereinigten Laugungsflüssigkeiten die ungelösten, hauptsächlich Bestandteile der Zellenmäntel und verunreinigtes elementares Silber umfassenden Rückstände abgetrennt werden.

4. Verfahren nach einem oder mehreren der Ansprüche 1 bis 3, dadurch gekennzeichnet, daß zur Ausfällung der praktisch unlöslichen Sulfide eine wässerige Lösung von Natriumsulfid zugeführt wird.

5. Verfahren nach einem oder mehreren der Ansprüche 1 bis 4, dadurch gekennzeichnet, daß die nach der Sulfidfällung im sauren Medium abgetrennten Niederschläge, die im wesentlichen aus Silberchlorid, Silbersulfid und Quecksilbersulfid bestehen, getrocknet, geröstet und zu den Metallen reduziert werden.

6. Verfahren nach einem oder mehreren der Ansprüche 1 bis 5, dadurch gekennzeichnet, daß die in der sauren Laugungsflüssigkeit ungelöst verbliebenen Rückstände einer Trennoperation zur Gewinnung des elementaren Silbers unterworfen werden, worauf die Silberbestandteile mit den nach der Sulfidfällung im sauren Medium abgetrennten Niederschlägen vereinigt und aufgearbeitet werden.

7. Verfahren nach einem oder mehreren der Ansprüche 1 bis 6, dadurch gekennzeichnet, daß die Alkalisierung durch Zusatz von Natriumhydroxid und/oder -carbonat vorgenommen wird.

8. Verfahren nach einem oder mehreren der Ansprüche 5 bis 7, dadurch gekennzeichnet, daß die Aufarbeitung der Niederschläge bzw. Ausfällungen durch Reduktion unter Zusatz von Soda und/oder Borax bei Temperaturen von 950 bis 1100°C vorgenommen wird.

9. Verfahren nach einem oder mehreren der Ansprüche 1 bis 8, dadurch gekennzeichnet, daß die Mäntel der Knopfzellen durch Ausübung mechanischen Druckes auf die zylindrischen Seitenwände der Zellennäpfe geöffnet werden.

Altbatterien

Sieben

Öffnen

Abscheiden des metallischen Hg

verunreinigtes metallisches Hg

Destillation

Hg(rein)

Wasser, Säure

Gehäuse und org.Bestandteile

Hg-hältige Dämpfe

mehrstufiges Auslaugen

$H_2O$

Gaswäscher od.Tiefkühlfalle

Abgas

SO2

Grobfiltration

ungelöste Rückstände

Trennoperation

Filter od. Kondensator

Hg

$H_2S$ und/oder wasserlösliche Sulfide

Sulfidfällung

Silberblättchen

Hg(rein)

Cd

Pb

Zn

Kondensation

metallisches Ag, AgCl, Ag$_2$S, Hg$_2$S und Spuren von Cd, Pb, Zn, Fe und Ni

Filtration

$H_2O$

Filtrat mit Cd,Pb,Fe,Hg Ni,Co,Zn,Cr

Hydroxide und/oder Carbonate

1. Trocknen
2. Rösten
3. Reduzieren

Filtration

Hydroxide und/oder Carbonate und Sulfide von Zn,Cd,Pb,Ni,Co, Fe,Cr,Hg

Rohsilber, enthaltend Spuren von Pb,Cd,Zn, Fe,Ni,Cr u.Co

Filtrat

Abwasser

Elektrolyse → Feinsilber

Anodenschlamm, enthaltend:Pb, Cd,Zn,Fe,Ni und Co